# EUROPEAN PATENT APPLICATION

(11) **EP 3 260 400 A1**
(43) Date of publication of application: **27.12.2017**
(21) Application number: 17177633.9
(22) Date of filing: 23.06.2017
(51) Int. Cl.: B65G 47/91, B25J 15/06, B25J 11/00

(54) **A VACUUM SYSTEM ADAPTED TO BE USED AS A VACUUM SOURCE FOR AT LEAST ONE GRIPPER DEVICE**

(30) Priority: 24.06.2016 DK PA201670456
(71) Applicant: Marel A/S, 8200 Arhus N (DK)
(72) Inventor: DALGAARD, Jens Kongensholm, 8362 Hørning (DK)
(74) Representative: Inspicos P/S

(57) **Abstract**

This invention relates to a vacuum system adapted to be used as a vacuum source for at least one gripper device for picking up a food item at a first position and releasing it at a second position, comprising a first housing comprising a first aperture (102) and a second aperture, a first piston head arranged within the first housing, a force source device, a piston rod extending through the first aperture, the piston rod having a first end connected to the first piston head and a second end connected to the force source device, wherein the second aperture is configured to connect to the at least one gripper device, the force source device being configured to operate a back and forth movement of the piston head within the first housing and thus to operate the pressure at the second aperture and thus at the at least one gripper device when picking up and releasing the food item.

## Description

### FIELD OF THE INVENTION

The present invention relates to a vacuum system adapted to be used as a vacuum source for at least one gripper device, and to a method of creating vacuum for the at least one gripper device using the vacuum system.

### BACKGROUND OF THE INVENTION

Gripper devices are commonly used in the food industry, as an example in creating batches of food items where several food items are put into trays that fulfil a pre-defined target such as a weight target. An example of implementation of such gripper devices is where chicken breasts are put in trays where the trays must fulfil a weight target of e.g. 1kg. Many different designs exist for such gripper devices that are designed to be suitable for picking up and transferring the food items to the trays. Many of these gripper devices are based on shovelling the food items into the gripper devices using two opposite sides that move from an open position to a closing position where they penetrate under the food items, and vice versa. The challenge in designing such gripper devices is to design them such that they fulfil several basic requirements so as to preserve the quality of the food items while picking up the food items and placing them into the trays. Simultaneously it must be ensured that the food items do not fall out from the gripper device during the transfer from the pickup area to the tray area.

Gripper devices that utilize vacuum source to pick up the food items and put them into e.g. trays exist. Such gripper devices use an external vacuum source, e.g. a vacuum pump or an injector, to provide the suction force (vacuum) needed to hold the food items during the transfer from the pickup area to e.g. the tray area where they are put into trays.

The problem with conventional vacuum pumps is that they are high power consuming (and therefore generate a lot of heat) and in general require complicated filtering including maintenance and cleaning. In most cases they have to be installed in a separate facility meaning significant vacuum pipe installation may be necessary. Even though filters can be installed close to the gripper and hence the most significant amount of debris can be removed from the air flow before going through the pipes, the inside of the pipes must be cleaned from time to time.

Alternative vacuum sources include Venturi generators (vacuum generated as a result when a fluid (or compressed air) flows through a constricted section (or choke) of a pipe) has among others the disadvantage that the output fluid and air from the Venturi generator contain not only the air coming from the vacuum channel but also the incoming fluid (or air) which means that the incoming fluid (or air) has to be cleaned in advance or the output fluid and air have to be led away from the product zone to avoid contamination of the food products.

Another disadvantage using Venturi generators is that a high efficient Venturi generator is a piece of complicated mechanics that is sensitive to particles and hence to debris from the food products. This means in turn that efficient filtering will be needed to ensure safe operation.

Moreover, said vacuum sources are simply not designed to be disassembled for cleaning purposes.

Further the use of such vacuum sources requires that also compressed air is used to at least neutralize the vacuum that holds the product at the gripper to release the product in a fast manner (the release can be further accelerated by directly adding overpressure to the gripper). As such compressed air come in direct contact with the food product it must be cleaned before use.

### SUMMARY OF THE INVENTION

On the above background it is an object of embodiments of the present invention to provide an improved and highly simplified vacuum system for gripper devices that is easy to clean and fulfils a high hygiene requirement for the food industry.

Embodiments of the invention preferably seek to mitigate, alleviate or eliminate one or more of the above mentioned disadvantages singly or in any combination. In particular, it may be seen as an object of embodiments of the present invention to provide a vacuum system that solves the above mentioned problems, or other problems, of the prior art.

To address one or more of these concerns, in a first aspect of the invention a vacuum system is provided adapted to be used as a vacuum source for at least one gripper device for picking up a food item at a first position and for releasing it at a second position, comprising:
- a first housing comprising a first aperture and a second aperture,
- a first piston head arranged within the first housing,
- a force source device,
- a piston rod extending through the first aperture, the piston rod having a first end connected to the first piston head and a second end connected to the force source device,
wherein the second aperture is configured to connect to the at least one gripper device, the force source device being configured to operate a back and forth movement of the piston head within the first housing and thus to operate the pressure at the second aperture and thus at the at least one gripper device when picking up and releasing the food item.

The back movement of the first piston head causes that a suction force is created at the second aperture and thus at the at least one gripper device, whereas the forth movement of the first piston head blows the air between the first piston head and the second aperture and thus creates a push force onto the food item when releasing it from the at least one gripper device. Accordingly, the air that is being sucked into the space between the first piston head and the second end is the same air that is blown out and provides the push force on the food item and is therefore the only air that interacts with the food item, i.e. no external air sources are needed. The hygiene of the vacuum system is therefore extremely high. Moreover, the air being blown out acts as a cleaning feature because any unwanted particles in said space, and/or at the second opening, and/or in the at least one gripper device, will immediately be blown out. Thus, the vacuum system also acts in a way as a self-cleaning system.

More importantly, due to the simplicity of the vacuum system it is easy to dissasemble the vacuum system simply by removing the piston and first piston head from the first housing. What remains is to empty the first housing and separate the first piston head with the rod, where, via e.g. flushing, spraying and the like, the components of the vacuum system may be cleaned within a short time.

The first housing and the first piston head may in one embodiment be made of light weight materials such as any kind of plastic material, where a sealing well know to a person skilled in the art may be provided between the first piston head and the first housing.

The first housing is typically, but is not limited to, a cylindrical shaped housing and the piston head is circular shaped with a diameter essentially the same as the inner diameter of the first housing.

The first aperture may in one embodiment be arranged at a first end of the first housing and the second aperture may be arranged at a second opposite end of the first housing, where the space between the first piston head and the first end defines a passive area and the space between the first piston head and the second end defines an operational area, the first housing further comprising at least one outlet at the first end or first end area such that during operation when moving the piston head towards the first end for providing a suction force at the second aperture, the at least one outlet acts as an exit for the air in the passive area. It is thus prevented that an opposite repelling force is created at the passive area.

In one embodiment, the force source device comprises a double acting pneumatic cylinder device. It is thus easy to regulate the vacuum level by adjusting the feed pressure of the cylinder. Other types of force source devices may of course also be implemented, such as but not limited to, any types of hydraulic driven devices, electrical devices and the like.

Such as double acting pneumatic cylinder device, which is well known to a person skilled in the art, may in one embodiment comprise:
- a second housing comprising a first aperture at a first end of the second housing, the first end of the second housing being mounted to the first end of the first housing such that the piston rod further extends through the first aperture of the second housing and thus into the second housing,
- a second piston head arranged within the second housing connected to the second end of the piston rod,
- a first valve positioned in a first compartment between the second piston head and a second end of the second housing, opposite to the first end of the second housing, the first valve being configured to provide an access of pressurized air into the first compartment and to release the pressurized air therefrom,
- a second valve positioned in a second compartment between the second piston head and the first end of the second housing configured to provide an access of pressurized air into the second compartment and to release the pressurized air therefrom,
- a control unit for controlling the first and the second valves, the controlling comprising:
   o when picking up the food item, injecting a pressurized air into the second compartment via the second valve while the first valve opens for allowing compressed air to exit the first compartment, the injection of compressed air causing movement of the second piston head towards the second end of the second housing and thus a movement of the first piston head towards the first end of the first housing and thus causes a suction force at the at least one gripper device, and
   o when releasing food item from the at least one gripper device the second valve is opened and a pressured air is injected into the first compartment via the first valve.

In one embodiment, the second aperture of the first housing is configured to receive a hose for connecting the vacuum system to the at least one gripper device. The vacuum system can thus be located externally away from the at least one gripper device and thus the working space where the at least one gripper is utilized may be reduced.

In one embodiment, the at least one gripper device comprises a connecting means for connecting the at least one gripper device directly to the second opening. In this case, there is no hose and the like that interconnects the vacuum system to the gripper device but instead the gripper device and the vacuum source engage directly with the food item. This has the advantage that volume of the first housing may be reduced because of the less volume in the system, i.e. no hose between the vacuum system and the at least one gripper device. Also, the vacuum force is obtained faster because of this less volume.

In one embodiment, the volume of at least the first housing is adapted to the time needed to move the food item from the first position to the second position, and a sealing condition between food item and the at least one gripper device, such that a suction force may be remained during this time. When picking up fresh food items such as meat slices, poultry breasts, and all kinds of food items including larger food items such as upper leg of pork, it is unlikely that there will be a perfect sealing condition between the at least one gripper device and the food item. Thus, there will in most instances be some leakage there between. In such instances it is important that the suction force remains sufficiently high during the transferring of the food item from the first position to the second position. In order to achieve this, the first housing must have sufficient volume to allow the first piston head to continuously move towards the first end of the first housing, and thus maintain sufficient vacuum force while transferring the food item from the first position to the second position. Also, the volume of the connection(s) between the vacuum system and the at least one gripper device, i.e. said possible hose connection, must obviously be taken into account to maintain this vacuum force.

In a second aspect of this invention, a method is provided for creating vacuum for at least one gripper device using the above mentioned vacuum system for picking up a food item at a first position and releasing it at a second position, the method comprising:
- placing the at least one gripper device onto the food item to be picked up such that a sealing is provided between the at least one gripper device and the food item, and
- applying a suction force at the at least one gripper device by means of moving the first piston head away from the second aperture by the force source device, the suction force being remained while moving the food item from the first position to the second position.

In one embodiment, the method further comprises releasing the food item at the second position by means of moving the first piston head towards the second aperture and thus provide an overpressure at the at least one pressure device.

Accordingly, a simplified method is provided to generate the suction force needed to pick up the food item at the first position and to release the food item at the second position, where high hygiene conditions are maintained that make the method suitable for use within the fresh food industry. Moreover, and as already addressed, the cleaning of the vacuum source is greatly facilitated compared to conventional vacuum sources such as vacuum pumps and Venturi generators which are not designed for facilitating cleaning.

In one embodiment, the food item is a fresh food item and the area of the at least one gripper device is selected such that it is less than a surface area of the fresh food item.

The operation of when to apply the suction force, for how long to remain it, and when to release the food item from the at least one gripper device may be operated as a response to signals from e.g. vision, sensors such as pressure sensor(s) and the like, where this signal may be used by a control unit as input data in instructing the vacuum system to generate vacuum force, and to indicate when to "push" or release the food item from the at least one gripper device, e.g. by moving the first piston towards the second aperture. This may be done via e.g. said double acting pneumatic cylinder where the control unit injects high pressurized air into said first and second valves to obtain this back and forth movement of the first piston head.

In general the various aspects of the invention may be combined and coupled in any possible way within the scope of the invention. These and other aspects, features and/or advantages of the invention will be apparent from, and elucidated with reference to the embodiments described hereinafter.

### BRIEF DESCRIPTION OF THE DRAWINGS

Embodiments of the invention will be described, by way of example only, with reference to the drawings, in which
figure 1 depicts graphically one embodiment of a vacuum system 100 according to the present invention, and
figures 2 and 3 depict graphically the gripper device in figure 1 during operation.

### DESCRIPTION OF EMBODIMENTS

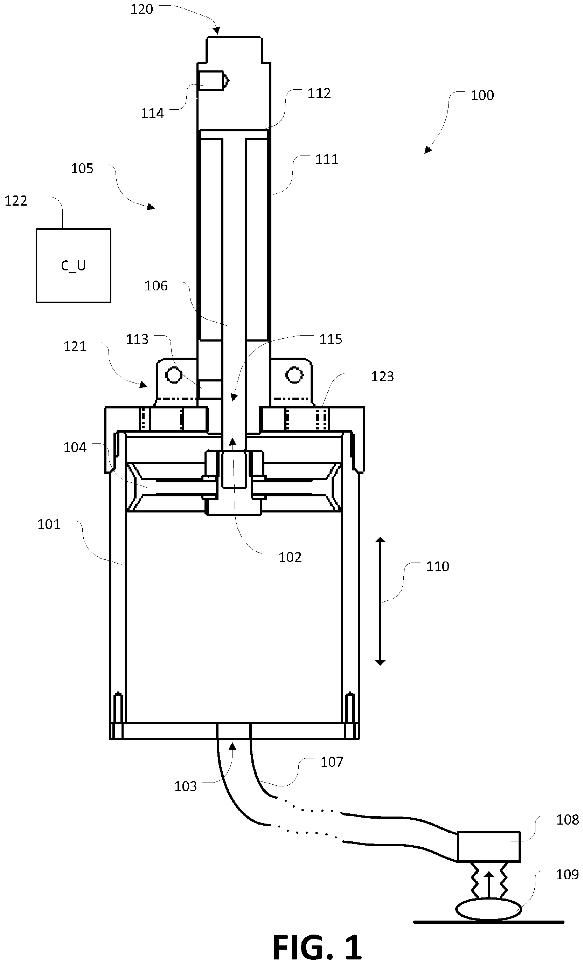

Figure 1 depicts graphically one embodiment of a vacuum system 100 according to the present invention adapted to be used as a vacuum source for at least one gripper device 108 for picking up a food item 109 at a first position and for releasing it at a second position. The first position may, as an example, be an infeed position of the food items, e.g. a type of an infeed conveyor, and the second position may e.g. be a position where the food item(s) 109 is e.g. put into a tray.

In the embodiment shown here, the vacuum system comprises a first housing 101 which typically has a cylindrical geometry, comprising a first aperture 102 at a first end of the first housing and a second aperture 103 at an opposite second end of the first housing. A first piston head 104 is arranged within the first housing and a force source device 105 is coupled to a piston rod 106 that extends through the first aperture 102, where a first end of the piston rod is connected to the first piston head 104 and a second end is connected to the force source device 106. As will be discussed in more details later, the force source device 106 may be a double acting pneumatic cylinder device, but other force source devices may just as well be implemented, such as but not limited to, any type of hydraulic device, electrical driven device and the like. The space between the first piston head 104 and the first end defines a passive area and the space between the first piston head 104 and the second end defines an operational area. At least one outlet 123 is arranged within the passive area, typically at the first end, and serves as exits for the air in this area such that during operation when moving the piston head 104 towards the first end for providing a suction force at the second aperture no counter forces will be created therein.

The second aperture 103 is configured to connect to the vacuum system 100 to the at least one gripper device 108, but this second aperture 103 may either be connected directly to the at least one gripper device 108, or as shown here via a hose 107 such that the vacuum system 100 may be positioned away from the at least one gripper device. The force source device 105 is configured to operate a back and forth movement as indicated by arrow 110 of the piston head 104 within the first housing 101 and thus to operate the pressure at the second aperture and thus at the at least one gripper device 108 when picking up and releasing the food item 109. When moving the first piston head 104 upwards towards the first opening a suction force is created at the second opening 103 and thus at the at least one gripper device 108. When moving the first piston head 104 towards the second aperture 103 a blowing out force is created for facilitating releasing the food item from the at least one gripper device 108.

In this embodiment, the force source device 105 comprises a double acting pneumatic cylinder device comprising: a second housing 111 comprising a first aperture 115 at a first end 121 of the second housing, the first end of the second housing being mounted to the first end of the first housing 101 in a way such that the piston rod 106 further extends through the first aperture 115 of the second housing and thus into the second housing. A second piston head 112 is arranged within the second housing 111 and is connected to the second end of the piston rod 106. A first valve 114 is positioned in a first compartment between the second piston head 112 and a second end 120 of the second housing 111, opposite to the first end 121 of the second housing. The first valve 114 is configured to provide an access of pressured air into the first compartment and to release the pressurized air therefrom. A second valve 113 is positioned in a second compartment between the second piston head 112 and the first end 121 of the second housing 111 and is configured to provide an access of pressured air into the second compartment and to release the pressurized air therefrom.

A control unit 122 may be provided for controlling the first and the second valves 114, 113 and thus the back and forth movement of the first piston head 104.

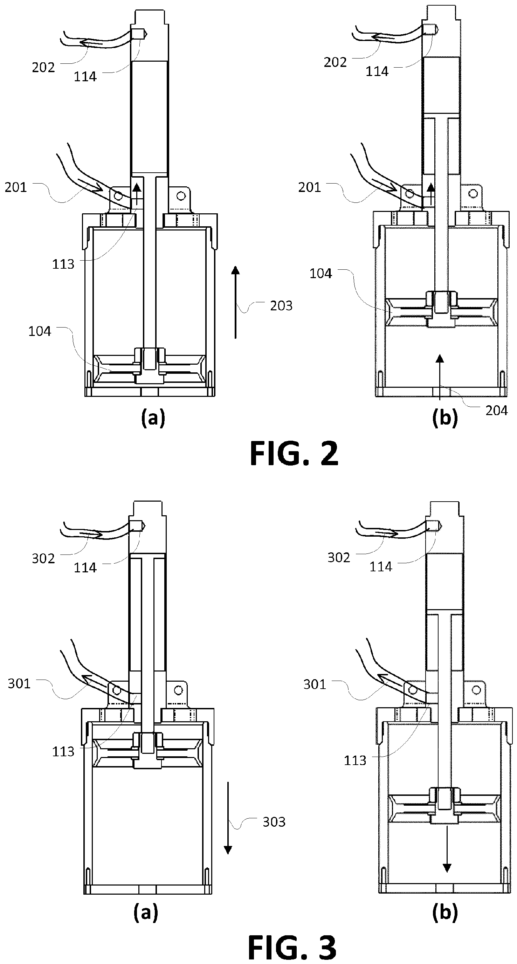

Figures 2a, b illustrate graphically an operation of the vacuum system 100 shown in figure 1, when picking up the food item (not shown). A pressured air 201 is injected into the second compartment via the second valve 113 while the first valve is open 114 for allowing compressed air 201 to exit the first compartment and thus to prevent a counter force therein. The injection of the compressed air causes a movement of the first piston head 104 in a direction indicated by arrow 203 thus causing a suction force 204 at the said second opening and thus at the at least one gripper device (not shown here).

Figures 3a ,b depict however the step of releasing the food item from the at least one gripper device by means of opening the second valve 113 and injecting pressured air 302 into the first valve 114 while simultaneously opening the second valve 113 for providing access for the compressed air 301 therefrom, causing a movement of the first piston head 104 in a direction indicated by arrow 303.

This interplay shown in figures 2 and 3 may be controlled by the control unit 122 discussed in relation to figure 1, in response to a control signal by e.g. computer vision, any types of sensor means, and the like.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

## Claims

1. A vacuum system (100) adapted to be used as a vacuum source for at least one gripper device (108) for picking up a food item (109) at a first position and releasing it at a second position, comprising:
• a first housing (101) comprising a first aperture (102) and a second aperture (103),
• a first piston head (104) arranged within the first housing,
• a force source device (105),
• a piston rod (106) extending through the first aperture (102), the piston rod having a first end connected to the first piston head (104) and a second end connected to the force source device (106),
wherein the second aperture (103) is configured to connect to the at least one gripper device (108), the force source device (105) being configured to operate a back and forth movement (110) of the piston head (104) within the first housing (101) and thus to operate the pressure at the second aperture and thus at the at least one gripper device when picking up and releasing the food item (109).

2. The system according to claim 1, wherein the first aperture is arranged at a first end of the first housing and where the second aperture is arranged at a second opposite end of the housing, the space between the first piston head (104) and the first end defining a passive area and the space between the first piston head (104) and the second end defining an operational area, the first housing (101) further comprising at least one outlet at the first end or first end area such that during operation when moving the piston head (104) towards the first end for providing a suction force at the second aperture the at least one outlet acts as an exit for the air in the passive area.

3. The vacuum system according to claim 1 or 2, wherein the force source device (105) comprises a double acting pneumatic cylinder device.

4. The vacuum system according to any of the preceding claims, wherein the second aperture of the first housing (103) is configured to receive a hose for connecting the vacuum system to the at least one gripper device.

5. The vacuum system according to any of the preceding claims, wherein the at least one gripper device comprises a connecting means for connecting the at least one gripper device directly to the second opening.

6. The vacuum system according to any of the preceding claims, wherein the volume of at least the first housing is adapted to the time needed to move the food item from the first position to the second position, and a sealing condition between food item and the at least one gripper device, such that a suction force may be remained during this time.

7. A method of creating vacuum for at least one gripper device using a vacuum system according to any of the claims 1 to 5 for picking up a food item (109) at a first position and releasing it at a second position, comprising:
• placing the at least one gripper device onto the food item to be picked up such that a sealing is provided between the at least one gripper device and the food item, and
• applying a suction force at the at least one gripper device by means of moving the first piston head away from the second aperture by the force source device, the suction force being remained while moving the food item from the first position to the second position.

8. The method according to claim 7, further comprising releasing the food item at the second position by means of moving the first piston head towards the second aperture and thus providing an overpressure at the at least one pressure device.

9. The method according to claim 7 or 8, wherein the food item is a fresh food item and where the area of the at least one gripper device is selected such that it is less than a surface area of the fresh food item.
